# EUROPEAN PATENT APPLICATION

(11) **EP 1 925 394 A1**
(43) Date of publication of application: **28.05.2008**
(21) Application number: 07022495.1
(22) Date of filing: 20.11.2007
(51) Int. Cl.: B23Q 11/06, B27B 5/22, B27B 25/10

(54) **Saw with wireless emergency stop**

(30) Priority: 24.11.2006 CN 200610145361
(71) Applicant: Rexon Industrial Corp., Ltd., Tali, Taichung Hsien (TW)
(72) Inventor: Chang, Yen-Chih, Tali Taichung Hsien (TW)
(74) Representative: Becker Kurig Straus

(57) **Abstract**

A table saw (1) includes a table (10), a saw blade (20), a guide control device (30), which has a push member (31) for pushing the workpiece for cutting by the blade (20) and a control device (32) for holding by the operator to move the push member (310. The control device (32) further has a first switch (33) and a transmitter module (34) that wirelessly sends out a disconnection signal when the first switch (33) is switched on. A driving mechanism (40) has a second switch (42), a motor (41) electrically connected to an external power supply device (44) through the second switch (42) and controllable by the second switch (42) to drive the saw blade (20), and a receiver module (43). The receiver module (43) switches off the second switch (42) upon receipt of the disconnection signal from the transmitter module (34).

## Description

### BACKGROUND

### 1. Field of the Invention

The present invention relates to a saw and more particularly, to a saw having a wireless emergency stop.

### 2. Description of the Related Art

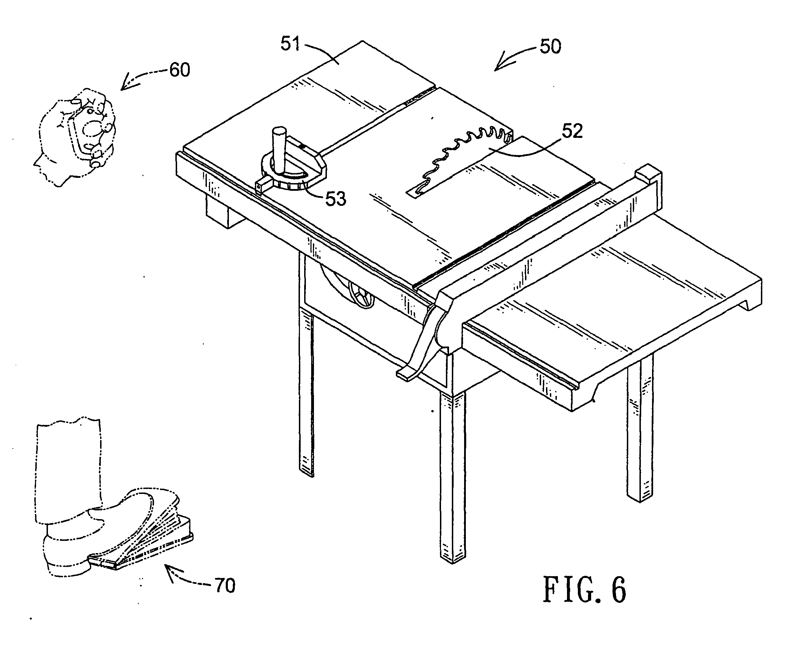

A conventional table saw 50, as shown in FIG. 6, generally comprises a table 51 for supporting a workpiece for cutting, a saw blade 52 insertable through a slot on the table 51 for cutting, and a miter gauge 53 driven by the user to move the workpiece on the table 51 in a cutting direction against the blade 52 for cutting the workpiece.

When operating the table saw 50 to cut a workpiece, the user must hold and push the miter gauge 53 with one hand and push the workpiece with the other hand. In case of an improper cutting or accident, the operator must have one hand free to operate a remote a controller 60 or press one foot on a pedal switch 70, thereby shutting down the table saw 50 and stopping the blade 52 from further rotation.

It is functional to use the remote controller 60 for stopping the blade 52 upon an emergency. However, when the operator is operating the saw, this operation of stopping the blade requires two steps, (1) the operator must move their hand from the table 52; and (2) the operator must find the remote controller 60 and then operate the remote controller 60. Executing these two steps wastes a certain period of time. If the operator cannot grasp the remote controller 60 immediately, the emergency stop requirement will not be met. Further, when the pedal switch 70 is used, the operator may be unable to step on the pedal switch 70 accurately due to his/her standing posture.

### SUMMARY

A table saw is disclosed, which has an emergency stop switch disposed near the operator's hand and which is immovable relative to the operator's hand as the operator is operating the table saw so that the operator can immediately switch on the emergency stop switch to stop the blade of the table saw upon an emergency or accident during operation of the table saw. To achieve this and other functions, the table saw comprises a table, a saw blade, a guide control device, and a driving mechanism. The table comprises a work surface suitable for supporting and carrying a workpiece and a slot cut through the work surface. The saw blade is inserted through the slot of the table for cutting the workpiece supported and carried on the work surface. The guide control device is coupled to the table, and has a push member and a control device connected to the push member for operation by the operator to move the push member. The push member is adapted to push the workpiece carried on the work surface along a cutting direction for cutting by the blade. The push member has a contact face for engaging the workpiece carried on the work surface. The contact face defines with the cutting direction a contained angle. The push member is adjustable to selectively change the contained angle. The control device comprises a first switch and a transmitter module electrically connected to the first switch. The transmitter module is adapted to transmit a disconnection signal when the first switch is switched on. The driving mechanism is installed in the table and connected to the blade, and comprises a motor, a second switch, and a receiver module. The second switch electrically connects the motor to an external power supply device and controls the supply of electricity from the external power supply device to the motor for causing the motor to drive the blade to cut the workpiece carried on the work surface. The receiver module is adapted to receive the disconnection signal from the transmitter module, and to switch off the second switch upon receipt of the disconnection signal.

By means of the aforesaid arrangement, the first switch is used as an emergency stop switch of the table saw. In case of an accident or emergency as the operator is holding the grip of the control device with one hand and pushing the workpiece with the other hand to cut the workpiece, the operator can directly switch on the first switch, causing the second switch to switch off the motor. Because the emergency stop switch is mounted in the control device, it does not occupy an extra installation space. Further, the emergency stop switch is immovable relative to the control device. Therefore, the operator can easily recognize the location of the emergency stop switch. This arrangement greatly shortens the response time to stop the motor.

### BRIEF DESCRIPTION OF THE DRAWING

FIG. 1 is a perspective view of a table saw in accordance with the present disclosure.
FIG. 2 is an elevational view of the guide control device of the table saw in accordance with the present disclosure.
FIG. 3 is an exploded view of the guide control device of the table saw in accordance with the present disclosure.
FIG. 4 is a schematic drawing showing the operation of the first switch of the table saw in accordance with the present disclosure. FIG. 5 is a system block diagram of the control system of the table saw in accordance with the present disclosure.
FIG. 6 is a perspective view of a conventional table saw.

### DETAILED DESCRIPTION OF THE INVENTION

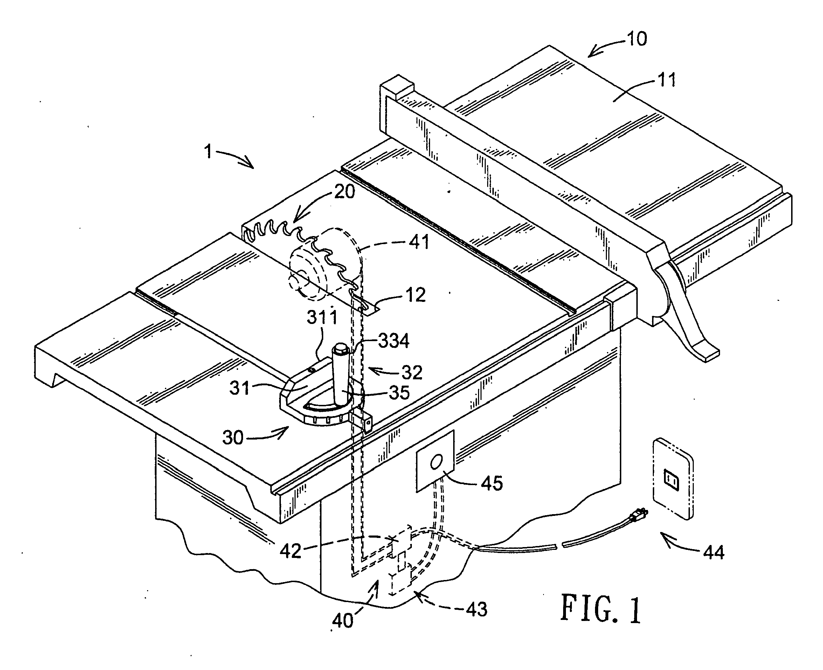

Referring to FIG. 1, a table saw 1 in accordance with the present invention is shown comprising a table 10, a saw blade 20, a guide control device 30, and a driving mechanism 40.

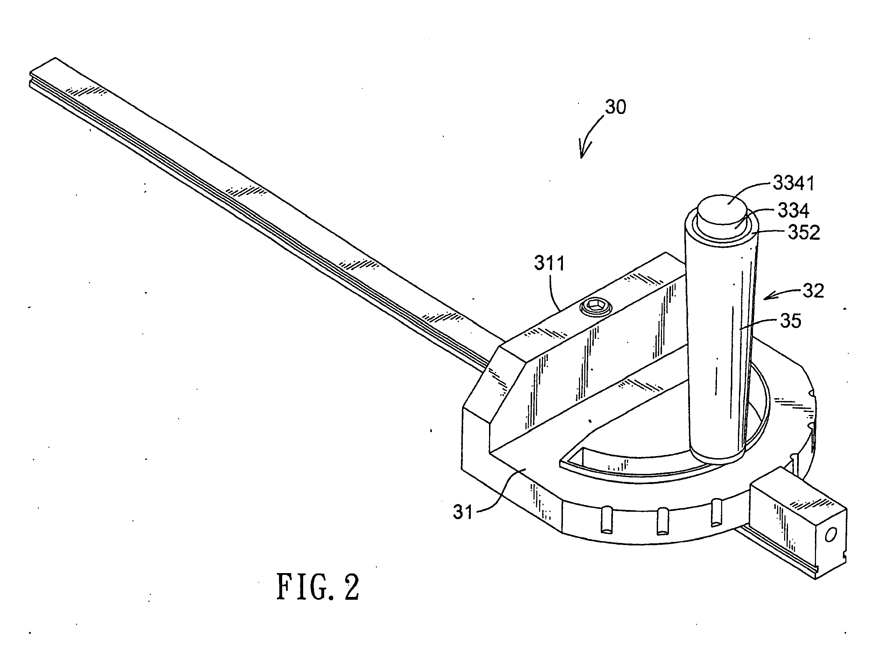

The table 10 has a work surface 11 for supporting and carrying the workpiece (not shown) to be cut, and a slot 12 cut through the work surface 11. The saw blade 20 is coupled to the driving mechanism 40 and is inserted through the slot 12 for cutting the workpiece carried on the work surface 11. Referring to FIG. 2 and FIG. 1 again, the guide control device 30 according to the present preferred embodiment is a miter gauge coupled to the table 10 and slidable back and forth on the work surface 11. The guide control device 30 comprises a push member 31 and a control device 32. The push member 31 is adapted to push the workpiece along a cutting direction (anteriorposterior direction) for cutting by the blade 20, via a contact face 311 for pushing the workpiece. The contained angle defined between the contact face 311 and the cutting direction is adjustable so that the cutting angle of the workpiece by the blade 20 can be changed. The control device 32 is connected to the push member 31. The operator can hold the control device 32 to push the push member 31.

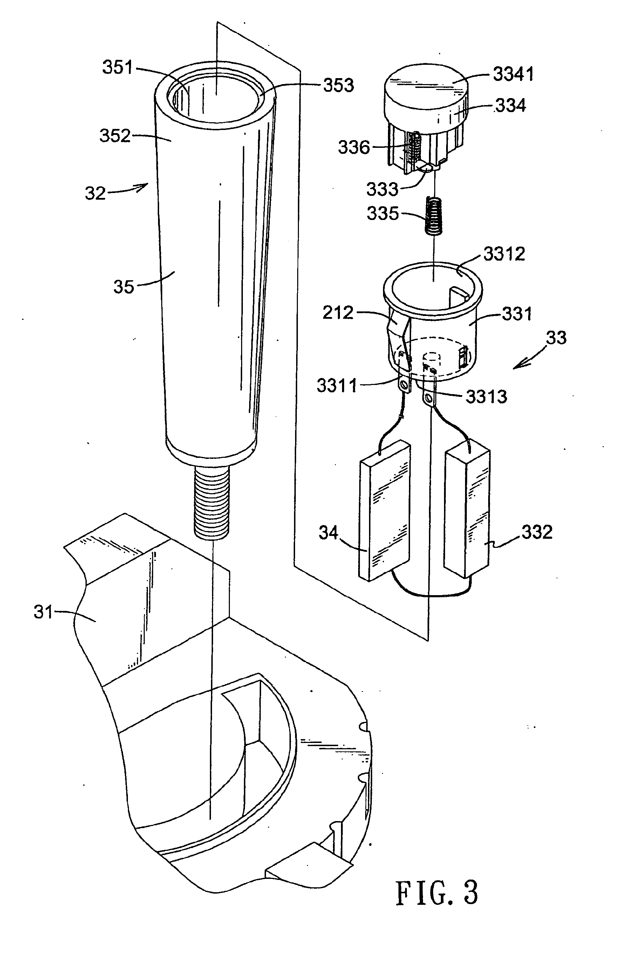

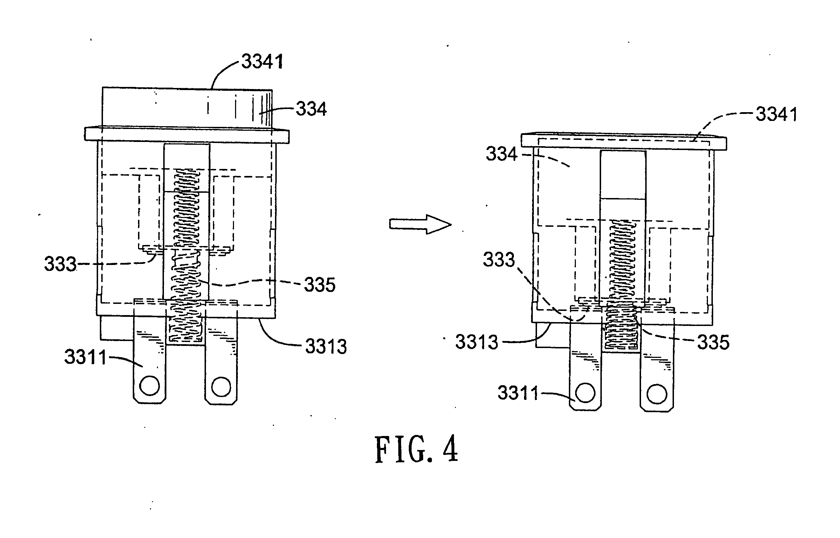

Referring to FIG. 3 and FIG. 2 again, the control device 32 comprises a first switch 33, a transmitter module 34, and a grip 35. The grip 35 has an open-top accommodation chamber 351 and a top part 352. The top part 352 has a top edge 353 extending around the open top side of the open-top accommodation chamber 351. The first switch 33 comprises a holder shell 331, a power supply device 332, a metal conducting plate 333, and a press button 334. The holder shell 331 is accommodated in the accommodation chamber 351 of the grip 35, and has a plurality of locating strips 212 that are equiangularly spaced around the periphery of the holder shell 331 and retained against the inside wall of the top part 352 of the grip 35 to secure the holder shell 331 firmly in place to the inside of the accommodation chamber 351. The holder shell 331 defines therein a receiving chamber 3312. Further, two metal conducting pins 3311 are affixed to the bottom wall 3313 of the receiving chamber 3312 of the holder shell 331 and are exposed to the outside of the receiving chamber 3312 of the holder shell 331. The power supply device 332 and the transmitter module 34 are accommodated in the accommodation chamber 351 beneath the holder shell 331, and are electrically connected in series between the two metal conducting pins 3311. Referring to FIG. 4 and FIG. 3 again, the press button 334 is axially movably inserted into the receiving chamber 3312 of the holder shell 331, and has a top press portion 3341 disposed above the elevation of the top edge 353 of the grip 35 arranged for depressing by the operator. The metal conducting plate 333 is movably mounted in the bottom side of the press button 334. The first switch 33 further comprises a first elastic member 336 and a second elastic member 335. The first elastic member 336 according to this embodiment is a compression spring supported between the metal conducting plate 333 and the top press portion 3341 of the press button 334 to hold the metal conducting plate 333 in a predetermined position. The second elastic member 335 according to this embodiment is a compression spring supported between the bottom side of the press button 334 and the bottom wall 3313 of the receiving chamber 3312 of the holder shell 331 to keep the metal conducting plate 333 away from the metal conducting pins 3311 when the top press portion 3341 of the press button 334 is not depressed. Therefore, when the top press portion 3341 of the press button 334 is not depressed, the two metal conducting pins 3311 are electrically disconnected. At this time the first switch 33 is off, and the power supply device 332 cannot provide electricity to the transmitter module 34. When the operator depresses the top press portion 3341 of the press button 334, the metal conducting plate 333 is forced into contact with the two metal conducting pins 3311 to switch on the first switch 33, thus causing the power supply device 332 to provide electricity to the transmitter module 34. Referring to FIG. 1 again, the driving mechanism 40 is installed in the table 10 and coupled to the saw blade 20. The driving mechanism 40 comprises a motor 41, a second switch 42, a receiver module 43, and a third switch 45. The motor 41 is electrically connected to an external power supply device 44 and is controllable to rotate the blade 20. The second switch 42 is electrically connected between the motor 41 and the external power supply device 44 for controlling the supply of electricity from the external power supply device 44 to the motor 41. When the second switch 42 is switched on, the external power supply device 44 provides the necessary working voltage to the motor 41 to start the motor 41. When the second switch 42 is switched off, the external power supply device 44 is electrically disconnected from the motor 41. According to this embodiment, the second switch 42 is a relay switch. The third switch 45 is for operation by the operator to turn on/off the motor 41 under the normal operation conditions. The receiver module 43 is adapted to receive a signal from the transmitter module 34 and a signal from the third switch 45 for switching the second switch 42 on/off.

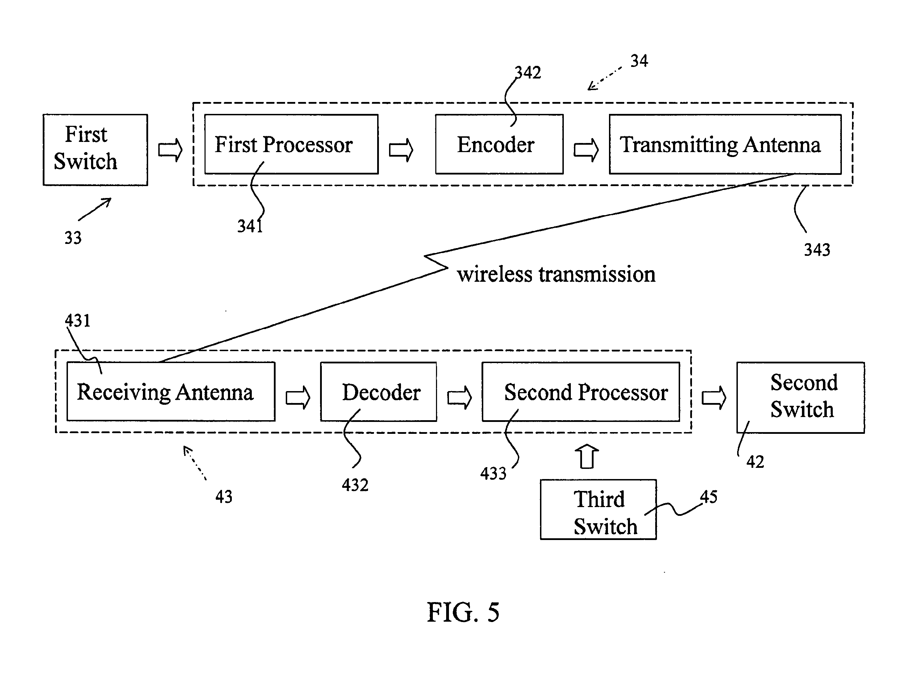

Referring to FIG. 5, the transmitter module 34 comprises a first processor 341, an encoder 342, and a transmitting antenna 343. The receiver module 43 comprises a receiving antenna 431, a decoder 432, and a second processor 433. When the motor 41 is in the normal off status, the first switch 33, the second switch 42 and the third switch 45 are in the open circuit status. At this time, the operator can switch on the third switch 45 to close the circuit, thereby providing a start signal. According to this embodiment, the start signal is a pulse that is transmitted to the second processor 433. Upon receipt of this pulse, the second processor 433 outputs a connection signal to the second switch 42 to switch on the second switch 42, thereby starting the motor 41. At the same time, the third switch 45 continuously provides an operation signal to the second processor 433. If the operator wishes to stop the motor 41, he (she) needs only to switch off the third switch 45, causing the third switch 45 to stop the output of the operation signal. When the second processor 433 no longer receives the operation signal, the second processor 433 immediately switches off the second switch 42.

When the motor 41 is in the normal operating status, the first switch 33 is in OFF status, the second switch 42 and the third switch 45 are in ON status. If the operator must stop the motor 41 due to an emergency, the operator needs only to depress the top press portion 3341 of the press button 334 to switch on the first switch 33, thus causing the power supply device 332 to provide a voltage signal to the first processor 341. Upon receipt of the voltage signal from the power supply device 332, the first processor 341 provides a disconnection signal, which is then encoded by the encoder 342 and then sent out by the transmitting antenna 343 wirelessly. The wireless disconnection signal is then received by the receiving antenna 431, which is then decoded by the decoder 432, and the decoded disconnection signal is then transmitted to the second processor 433. Upon receipt of the disconnection signal, the second processor 433 immediately switches off the second switch 42 to stop the motor 41.

When the operator releases their hand from the top press portion 3341 of the press button 334, the first switch 33 is switched off. When wishing to start the motor 41 again at this time, the operator needs to switch off the third switch 45 and then to switch on the third switch 45 again, causing the third switch 45 to output a start signal to the second processor 433. Upon receipt of the start signal at this time, the second processor 433 immediately outputs a connection signal to the second switch 42 to switch on the second switch 42, thereby starting the motor 41.

According to the above statement, the emergency stop switch of the table saw 1 is installed in the control device 32 of the guide control device 30. In case of an accident or emergency, as the operator is holding the grip 35 of the control device 32 with one hand and pushing the workpiece with the other hand to cut the workpiece, the operator can directly depress the press button 334 to stop the motor 41. Because the top press portion 3341 of the press button protrudes over the top edge 353 of the grip 35, the operator can directly depress the press button 334 with the thumb of the hand holding the grip 35 to conveniently stop the motor 41. Because the emergency stop switch is mounted in the grip 35 of the control device 32, it does not occupy an extra installation space. Further, the emergency stop switch is immovable relative to the grip 35. Therefore, the operator can easily recognize the location of the emergency stop switch. This arrangement greatly shortens the response time to stop the motor 41. When wishing to start the motor 41 again, the operator needs to operate the normal operating switch twice. This design eliminates the problem of accidentally starting the motor 41 by the operator or any person who has come to help.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A saw (1) comprising:
a table (10) having a work surface (11) defining a slot (12) therethrough;
a saw blade (20) inserted through said slot (12);
a guide control device (30) coupled to said table (10) and having a push member (31) and
a control device (32) connected and arranged to move to said push member (31) along a cutting direction, said push member (31) having a contact face (311) defining with said cutting direction a contained angle, said push member (31) being adjustable to selectively change said contained angle; and a driving mechanism (40) installed in said table (10) and connected to said saw blade (20), **characterized in that**:
said control device (32) having a first switch (33) and a transmitter module (34) electrically connected to said first switch (33), said transmitter module (34) being adapted to transmit a disconnection signal when said first switch (33) is switched on;
and said driving mechanism (40) having a motor (41), a second switch (42), and a receiver module (43), said second switch (42) electrically connecting said motor (41) to an external power supply device (44) and controlling the supply of electricity from said external power supply device (44) to said motor (41) for causing said motor (41) to drive said saw blade (20), said receiver module (43) being adapted to receive said disconnection signal from said transmitter module (34) and to switch off said second switch (42)upon receipt of said disconnection signal.

2. The saw as claimed in claim 1, **characterized in that** said control device (32) comprises a grip (35) having an open-top accommodation chamber (351) and a top part (352) having a top edge (353) extending around a top open side of said open-top accommodation chamber (351); said transmitter module (34) mounted in the accommodation chamber (351) of said grip (35); and said first switch (33) having a top press portion (3341) protruding over the top edge (353) of said top part (352) of said grip (35).

3. The saw as claimed in claim 2, **characterized in that** said first switch (33) comprises:
a holder shell (331), fastened to the top part (352) of said grip (35), and having a receiving chamber (3312) with a bottom wall (3313);
two conducting pins (3311) affixed to the bottom wall (3313) of said receiving chamber (3312) and extending out of said holder shell (331) and suspended into the accommodation chamber (351) of said grip (35);
a power supply device (332) having a first end electrically connected to a first one of said two conducting pins (3311) and a second end electrically connected to a second one of said two conducting pins (3311) through the transmitter module (34);
and a press button (334) mounted in the receiving chamber (3312) of said holder shell (331), said press button (334) having a conducting plate (333) disposed at a bottom side thereof, and a top press portion (3341) adapted for pressing to move said conducting plate (333) between a first position where said conducting plate (333) contacts said two conducting pins (3311) to switch on said power supply device (332) and said transmitter module (34) and a second position where said conducting plate (333) is positioned away from said two conducting pins (3311) to switch off said power supply device (332) and said transmitter module (34).

4. The saw as claimed in claim 3,
**characterized in that** said first switch (33) further comprises an elastic member (335) supported between the bottom wall (3313) of said receiving chamber (3312) of said holder shell (331) and a bottom side of said press button (334) to hold said conducting plate (333) in said second position; or
**characterized in that** said press button (334) further comprises an elastic member (336) supported between said conducting plate (333) and said top press portion (3341).

5. The saw as claimed in claim 1, **characterized in that** said first switch (33) further comprises a press button (334) for operation to switch on/off said first switch (33).

6. The table saw as claimed in claim 5, **characterized in that** said control device (32) comprises a grip (35) having an open-top accommodation chamber (351) and a top part (352) having a top edge (353) extending around a top open side of said open-top accommodation chamber (351); said transmitter module (34) mounted in the accommodation chamber (351) of said grip (35); and said press button (334) of said first switch (33) having a top press portion (3341) protruding over the top edge (353) of said top part (352) of said grip (35).

7. The saw as claimed in claim 1, **characterized in that** said driving mechanism (40) further comprises a third switch (45) adapted to provide a start signal to said receiver module (43) for causing said receiver module (43) to output a connection signal to said second switch (42) to switch on said second switch (42).

8. The saw as claimed in claim 7, **characterized in that** said start signal is a pulse signal that is produced when said third switch (45) is switched from OFF status to ON status.

9. The saw as claimed in claim 8, **characterized in that** said third switch (45) continuously provides an operation signal to said receiver module (43) when switched on; and said receiver module (43) switches off said second switch (42) when reception of said operation signal by the receiver module (43) is interrupted.

10. The saw as claimed in claim 1,
**characterized in that** said driving mechanism (40) further comprises a third switch (45), said third switch (45) being adapted to output a pulse signal to said receiver module (43) at the moment when said third switch (45) is switched on, said receiver module (43) outputting a connection signal to said second switch (42) to switch on said second switch (42) upon receipt of said pulse signal from said third switch (45), said third switch (45) continuously providing an operation signal to said receiver module (43) when switched on, and said receiver module (43) switching off said second switch (42) upon interruption of reception of said operation signal from said third switch (45); or
**characterized in that** said transmitter module (34) comprises a first processor (341) adapted to output said disconnection signal when said first switch (33) is switched on, an encoder (342) adapted to encode said disconnection signal, and a transmitting antenna (343) adapted to wirelessly send out the encoded disconnection signal from said encoder (342); said receiver module (43) having a receiving antenna (431) adapted to wirelessly receive the encoded disconnection signal from said transmitting antenna (343), a decoder (432) adapted to decode the encoded disconnection signal received by said receiving antenna (431), and a second processor (433) adapted to receive the decoded disconnection signal from said decoder (432) and to switch off said second switch (42) upon receipt of the decoded disconnection signal from said decoder (432); or
**characterized in that** said second switch (42) is a relay; or
**characterized in that** the control device (32) comprises: a grip (35) having an accommodation chamber (351); and said transmitter module (34) is mounted in the accommodation chamber (351); or
**characterized in that** the control device (32) comprises: a grip (35) having the transmitter module (34) mounted thereon.
